# FASCICULE DE BREVET EUROPEEN

(11) **EP 3 192 356 B1**
(45) Date de publication et mention de la délivrance du brevet: **31.08.2022**
(21) Numéro de dépôt: 17151326.0
(22) Date de dépôt: 13.01.2017
(51) Int. Cl.: A01G 31/02, A01G 9/04, A01G 13/02

(54) **DISPOSITIF DE CULTURE EN BAC, NOTAMMENT HYDROPONIQUE, MODULAIRE**
VORRICHTUNG ZUM MODULAREN ANBAU VON PFLANZEN IN EINER SCHALE, INSBESONDERE MIT HYDROKULTUR
CULTURE DEVICE IN A BOX, IN PARTICULAR HYDROPONIC AND MODULAR

(30) Priorité: 14.01.2016 FR 1650298
(43) Date de publication de la demande: 19.07.2017
(73) Titulaire: Agrilogic Systemes Sarl, 98800 Nouméa (FR)
(72) Inventeur: DESPUJOLS, Joël, 98800 Nouméa (FR)
(74) Mandataire: Aquinov

(56) Documents cités:
- WO-A1-2012/172187
- FR-A1- 2 659 192
- FR-A1- 3 013 941
- US-A1- 2013 340 337
- DATABASE WPI Week 201332 Thomson Scientific, London, GB; AN 2013-E34242 XP002769927, -& ES 1 077 461 U (AUXILIAR PROD TECNICOS SL) 24 juillet 2012 (2012-07-24)

## Description

La présente invention vise un dispositif de culture en bac, notamment hydroponique, modulaire.

On sait la propension des gens des villes notamment à vouloir cultiver sans pour autant disposer d'un terrain, qu'il s'agisse de fleurs mais aussi de plantes aromatiques voire de fruits et/ou de légumes.

On connaît aussi la production à plus grande échelle de légumes tels que des salades ou de fruits tels que des fraises dans des bacs notamment par hydroponie, c'est-à-dire une culture sans substrat ou avec un substrat léger.

On connaît de façon générale les cultures en substrats solides, c'est-à-dire de la terre ou des billes d'argile dans des bacs ou des pots qui disposent de réserves d'eau en partie inférieure. Il existe même des bacs et pots munis de dispositifs d'arrosage régulier, programmables, afin de pomper l'eau dans la réserve et de la distribuer en surface dudit pot éventuellement en goutte à goutte pour permettre de maintenir un taux d'humidité satisfaisant dans le milieu de culture solide. Il faut alors une connexion électrique.

L'avantage de ces dispositifs est la simplicité de fonctionnement quand il n'y a pas d'arrosage et la qualité des végétaux obtenus est tout à fait satisfaisante. Par contre, il faut acheminer des substrats lourds sur le lieu d'utilisation car le déplacement est difficile ensuite et lorsque c'est une terrasse, cela peut être plus compliqué et fastidieux. De plus la mise en place du milieu et des plants, les manipulations, le regarnissage éventuel restent salissants et délicats. De plus, il est nécessaire que le résultat final puisse présenter des formes esthétiques extérieures agréables, surtout lorsqu'il s'agit d'une terrasse de ville, ce qui n'est pas toujours le cas dans les pots et bacs à réserve d'eau.

Le dispositif recherché vise une culture hydroponique afin de s'affranchir du substrat lourd, de faciliter la mise en œuvre.

De plus, le dispositif selon l'invention doit donc être intégrable dans des meubles de jardin adaptés par exemple ceux-ci pouvant varier tant dans les formes que dans les matériaux et conférer l'aspect esthétique recherché. Dans ce cas, le dispositif de culture doit être totalement autonome et ne pas porter atteinte à l'intégrité du meuble qui le reçoit tant par les débordements que par le milieu de culture utilisé.

Ensuite, l'intérêt de l'agencement du dispositif de culture en bac selon l'invention est d'être modulaire afin de pouvoir être adapté à différentes situations, à différents besoins de la part des utilisateurs.

Il est utile de prévoir la possibilité de cultiver dans des lieux chauds mais aussi dans des lieux froids ou ventés, l'agencement du dispositif devra donc comporter des moyens de protection du froid ou de protection du vent, si nécessaire. Avantageusement, ces moyens de protection sont intégrés au meuble destiné à recevoir un dispositif de culture hydroponique agencé selon la présente invention.

Un dispositif selon l'invention est un accessoire d'aménagement ou de production à grande échelle mais dans tous les cas, le prix de fabrication du produit doit pouvoir être réduit afin de permettre une fabrication industrielle, modulaire, notamment dimensionnellement et de pouvoir convenir à la gamme de prix recevant un assentiment de la part des acheteurs. Enfin, qui dit culture dit arrosage. Ceci est un réel problème ou pour le moins une réelle contrainte et le pouvoir attractif du dispositif selon la présente invention est de réduire ces contraintes à leur minimum.

Ceci est d'autant plus important lorsque l'on parle de culture hydroponique.

On connaît par la demande de brevet WO 2015/113077 un dispositif adapté pour la culture hydroponique, qui comprend un agencement avec plusieurs gouttières de culture destinées à recevoir les plants, dont le fond est incliné pour permettre un écoulement du fluide de culture et les plants sont arrosés pour en permettre la croissance.

Un couvercle muni d'ouvertures laisse passer la partie aérienne des plants tandis que les racines plongent dans le fluide de culture.

Ce dispositif comporte de nombreuses pièces emboîtées les unes dans les autres, sans étanchéité.

On connaît un dispositif de culture du document ES-A-1077461 et du FR-A-2659192.

Le transport de l'ensemble n'est pas pratique et l'utilisateur doit assurer un montage de plusieurs pièces entre elles, non étanches. Il lui faut ensuite réaliser des réglages.

Le dispositif monobloc selon la présente invention est beaucoup plus adapté à la demande et aux besoins des utilisateurs en évitant tout débordement, toute fuite, en étant autonome, en évitant tout montage de pièces, pouvant être transporté sans effort physique du fait du faible poids, sans technicité ou connaissances horticoles.

Sa version modulable permet d'envisager toutes les formes de cultures hors sol, différents substrats ou même en aéroponie.

Le but est d'allier les performances de la culture en substrat solide avec les avantages de la culture hydroponique. On obtient ainsi, avec le dispositif selon la présente invention, de bonnes productivités, que ce soit des fleurs ou des légumes, mais aussi de très bonnes qualités organoleptiques des produits consommables.

Le présente invention concerne un dispositif selon la revendication 1.

La présente invention est maintenant décrite en détail suivant un mode de réalisation particulier, non limitatif, en regard des dessins annexés, dessins sur lesquels les différentes figures représentent :
- Figure 1 : une vue en perspective éclatée d'un dispositif qui ne fait pas partie de l'invention.
- Figure 2 : une vue en coupe transversale du bac constituant une partie d'un dispositif qui ne fait pas partie de l'invention.
- Figure 3 : une vue en coupe transversale qui ne fait pas partie de l'invention, au droit des bouchons d'extrémités du bac,

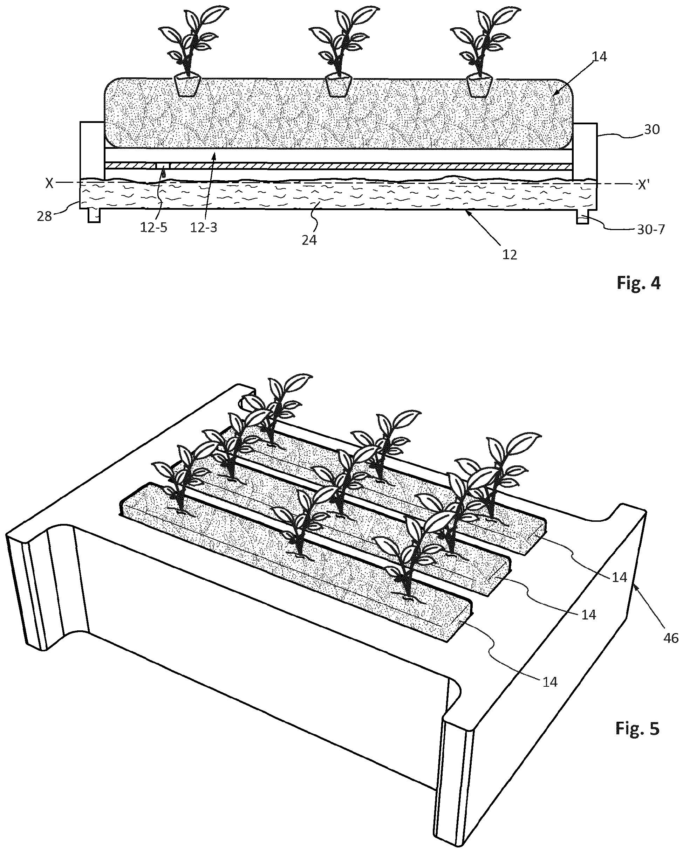

- Figure 4 : une vue en coupe longitudinale selon un axe médian d'un dispositif qui ne fait pas partie de l'invention. représenté sur la figure 1, après montage,
- Figure 5 : une vue d'un dispositif qui ne fait pas partie de l'invention. intégré dans un meuble de jardin,
- Figure 6 : une vue des moyens de protection du froid et/ou du vent, intégrés dans un meuble de jardin, en position d'attente, qui ne fait pas partie de l'invention.
- Figure 7 : une vue des moyens de protection du froid et/ou du vent, intégrés dans un meuble de jardin, dans une des positions de service, qui ne fait pas partie de l'invention.
- Figure 8 : une vue en perspective d'une variante de réalisation du dispositif selon la présente invention, à double étage, modulable.

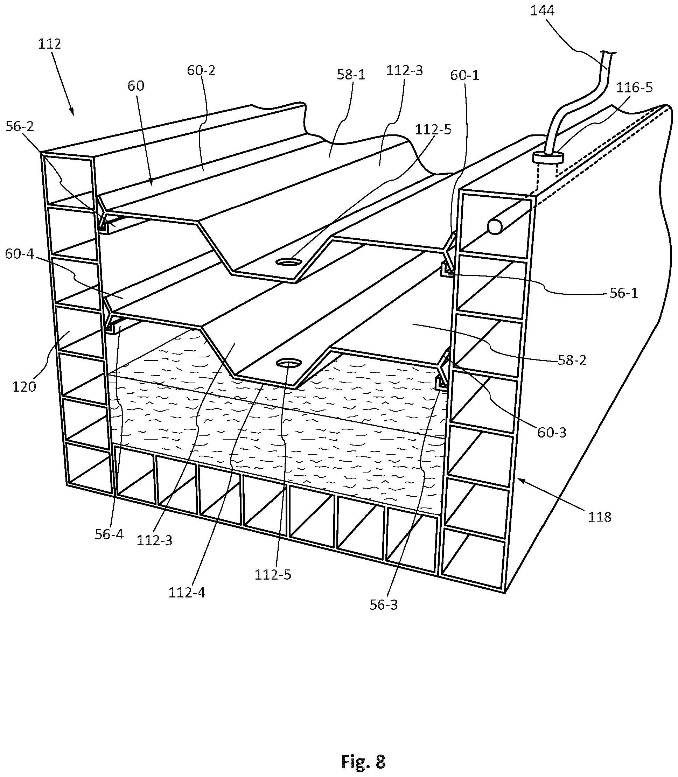

La présente invention est maintenant décrite en détail en regard à figure 8. Sur la figure qui ne fait pas partie de l'invention, notamment, on peut prendre note des différents éléments constitutifs d'un dispositif.

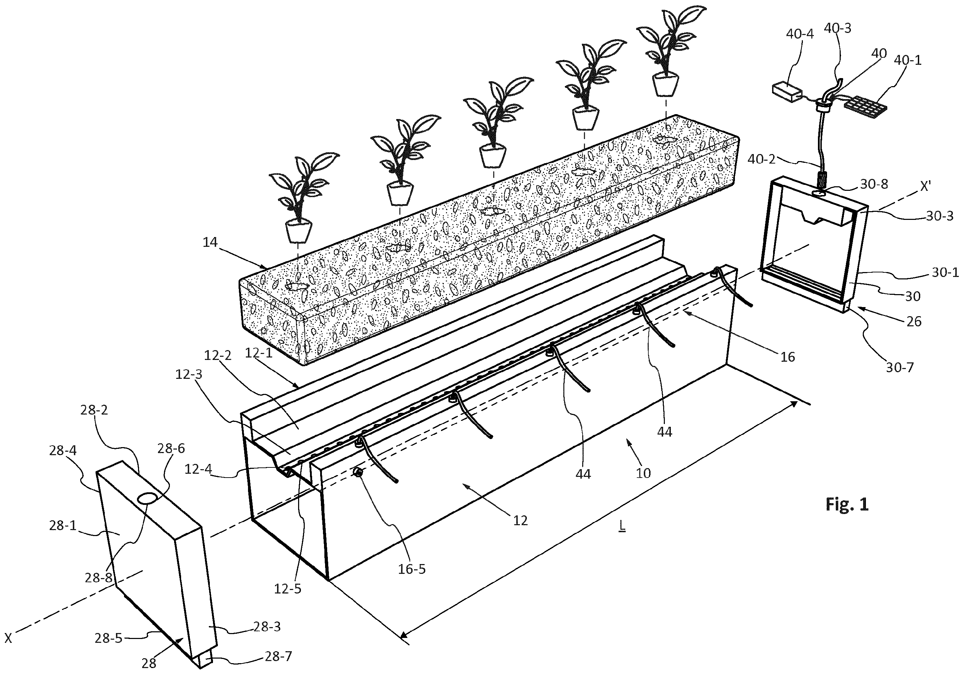

Sur cette figure 1, qui ne fait pas partie de l'invention, on a référencé 10 le dispositif dans son ensemble qui comprend un bac 12, de longueur L, prise suivant un axe XX' longitudinal.

Ce bac 12 est monolithique, à section sensiblement carrée et fermée, avec une plaque formant la face supérieure 12-1 destinée à recevoir un substrat 14 léger de culture, sous forme d'un pain de substrat, comme représenté sur la figure 1. Ce substrat 14 léger est avantageusement choisi parmi les substrats fibreux d'origine naturelle, notamment la fibre de coco compressée ou la sphaigne. Ces matériaux sont connus pour être très légers à sec d'une part et pour leur très forte capacité hydrophile d'autre part donc ses fortes propensions à retenir le fluide nutritif.

De plus ces matériaux peuvent être fortement comprimés, ce qui facilite le transport.

De façon particulière, la face supérieure 12-1 est de section en U, la face inférieure du pain de substrat 14 léger, venant reposer sur le fond 12-2 de cette face supérieure à profil en U. Ce fond 12-2 comporte au moins une dépression 12-3 de façon à permettre une circulation de l'air sous le substrat. En l'occurrence, cette dépression 12-3 prend la forme d'une gorge en V tronqué, la partie inférieure 12-4 du V tronqué se situant nécessairement en-dessous du plan du fond 12-2 de la face supérieure 12-1. La partie inférieure 12-4 de cette dépression 12-3 est munie d'au moins un trou 12-5 d'évacuation des fluides, en particulier le fluide nutritif mais également les eaux de pluie éventuellement tombées.

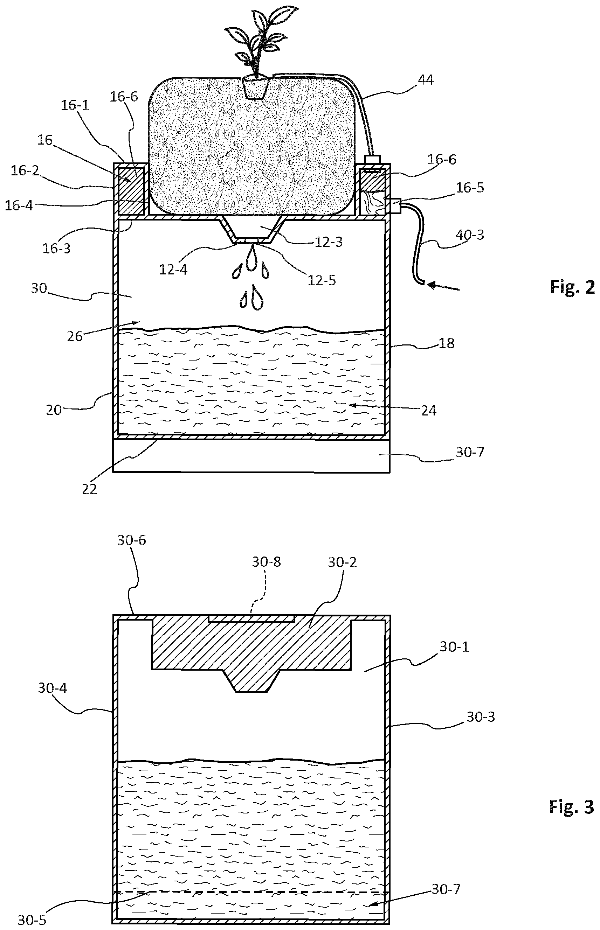

Au moins une des branches longitudinales du U comporte une rampe longitudinale 16, fermée sur quatre côtés, 16-1 qui constitue aussi le dessus de la branche du U, 16-2 qui constitue aussi la face extérieure de la branche du U, 16-3 le dessous qui relie les deux branches du U et 16-4 qui constitue la face interne de la branche du U, voir figure 2.

Chaque rampe longitudinale 16 est munie d'un piquage 16-5 d'alimentation de façon à permettre une communication avec l'intérieur dudit volume de la rampe longitudinale. Ces rampes longitudinales 16 sont aptes à recevoir des bouchons 16-6 aux extrémités, destinés à obturer de façon étanche ces rampes, voir notamment sur la figure 2, qui ne fait pas partie de l'invention.

Ce bac 12 monolithique est complété, toujours de façon monolithique, en plus de la face supérieure 12, par trois faces latérales : droite 18, gauche 20 et inférieure 22. On note que les faces droite et gauche sont dans le prolongement des branches extérieures du U. La section de ce profilé constituant le bac 12 est de section fermée.

Les trois faces latérales droite 18, gauche 20 et inférieure 22 constituent un volume également en U, dénommé volume 24 de collecte de fluides tels que le fluide nutritif et l'eau de pluie. Ces faces, au moins les faces latérales, à double paroi afin de limiter les transferts thermiques froid ou chaud et de renforcer l'ensemble.

Ainsi que cela est représenté sur la figure 1, qui ne fait pas partie de l'invention, le bac 12 est obturé à ses extrémités par des bouchons 26, en l'occurrence un bouchon avant 28, côté X et un bouchon arrière 30, côté X' de l'axe longitudinal XX'.

Ces bouchons 28, 30 constituent eux-mêmes des volumes avec 6 faces à savoir :
- une face avant 28-1, qui est la face du bouchon, côté extérieur,
- une face arrière 28-2, qui est la face en contact avec le bac,
- une face latérale droite 28-3, en regardant suivant l'axe longitudinal XX',
- une face latérale gauche 28-4, en regardant suivant l'axe longitudinal XX',
- une face inférieure 28-5, située en dessous,
- une face supérieure 28-6 située au-dessus.

La face avant 28-1 est de la même surface que la section du bac 12.

La face arrière 28-2, comporte une ouverture du profil de la face supérieure en U et avec la dépression 12-3, en l'occurrence la dépression 12-3 en forme de V tronqué, selon le mode de réalisation retenu et les trois faces latérales droite 18, gauche 20 et inférieure 22.

Le volume 24 de collecte de fluide est ainsi en communication avec l'intérieur du volume du bouchon avant 28.

Par contre, on note que le pain de substrat 14 léger de culture est retenu latéralement par les branches de la face supérieure 12 en U, suivant une direction perpendiculaire à l'axe XX' et que le pain de substrat 14 léger de culture est retenu par la face arrière 28-2 du bouchon avant 28.

Le bouchon arrière 30 est réalisé exactement de façon symétrique et comporte avantageusement les mêmes faces, 30-1 - 30-6 que le bouchon avant 28.

En partie inférieure de chaque bouchon 28, 30, il est prévu sur la face inférieure 28-5, 30-5 une dépression formant une cavité de puisage 28-7, 30-7. Ceci est prévu dans un souci de symétrie et pour offrir des possibilités complémentaires d'agencement mais le dispositif peut ne comporter aucune cavité de puisage ni sur un bouchon ni sur l'autre ou sur un des bouchons seulement.

En partie supérieure, la face supérieure 28-6, 30-6 comporte un orifice 28-8, 30-8 de puisage. Ces bouchons 28, 30 sont solidarisés au bac 12 de quelque façon que ce soit, par collage, par emboîtement et soudage par ultrasons pour ne citer que ces exemples.

Ainsi, le volume 24 de collecte de fluides du bac 12 est en communication avec l'intérieur des volumes du premier bouchon 28 et du second bouchon 30 ne formant qu'un seul et même volume 24 de collecte des fluides.

Le dispositif 10 constitue un module autonome.

La modularité vient notamment du fait que le nombre de modules peut varier et ces modules peuvent être déposés côte à côte, en quinconce par exemple.

Surtout, chaque module peut être obtenu à la longueur désirée du fait qu'il suffit de fabriquer le profilé à la longueur souhaitée ou mieux au défilé puis débité. Ce profilé peut ainsi être obtenu par extrusion et donc en grande longueur. Un tel procédé de fabrication connu permet des productions de façon industrielle et rapide. Les grandes longueurs extrudées peuvent être découpées en fonction des besoins.

A l'inverse, si les profilés sont réalisés en petites longueurs, la présente invention prévoit un manchon, non représenté car un tel manchon est réalisé comme un bouchon d'extrémité mais lui-même symétrique afin de recevoir l'extrémité d'un bac 12 de chaque côté. Ainsi, le substrat peut être discontinu et le bac continu. Les rampes 16 longitudinales sont alors raccordées entre elles.

Selon un mode de réalisation préférentiel de la présente invention, le dispositif est équipé de moyens de pompage, notamment une pompe 40, alimentée par un panneau solaire 40-1 pour être autonome, afin de mettre en pression du fluide nutritif dans la rampe longitudinale 16. Cette pompe 40 dispose d'une prise d'eau 40-2, positionnée avantageusement dans la cavité de puisage 28-7, 30-7 donc au point le plus bas afin de pouvoir utiliser tout le fluide contenu dans le volume de collecte 24.

Un tuyau de connexion 40-3 permet de relier la sortie de la pompe 40 et le piquage 16-5 de la rampe longitudinale 16.

Les moyens d'administration du fluide nutritif comprennent la rampe longitudinale 16 qui est équipée de goutteurs 44, montés eux-mêmes sur des piquages préalablement rapportés sur ladite rampe ou à partir de piquages auto taraudeurs mis en place sur la rampe.

Les goutteurs permettent d'assurer la circulation du fluide nutritif à travers le substrat.

La pompe 40 peut aussi être associée à un programmateur 40-4 de façon à permettre d'établir un programme d'arrosage. Le débit est réglé par les débits des goutteurs et le choix de ces goutteurs et/ou la fréquence des arrosages.

On note que le fluide nutritif s'écoule à travers le substrat léger à base de fibres et le fluide traversant est recueilli en partie basse pour être collecté par la dépression 12-3 en forme de V tronqué, fluide nutritif collecté qui s'écoule à son tour dans le volume de collecte 24 à travers le au moins un trou d'évacuation 12-5.

On dispose ainsi d'un dispositif de culture hydroponique intégralement autonome, dont les racines des plants au sein dudit bac sont aérées par le dessous du substrat, dont le liquide nutritif est collecté, dont le substrat est maintenu uniquement par sa partie inférieure, ce qui permet un très bon développement racinaire.

Le transport du dispositif est aisé car il est monolithique, léger et son installation ne requiert aucune connexion électrique ou fluidique.

Il suffit de rapporter les plants dans le substrat, de remplir le volume de collecte 24 à travers le au moins un orifice de puisage avec du liquide nutritif et de programmer l'arrosage, des pré programmes pouvant même être prévus en fonction des fruits et/ou légumes plantés. De même le liquide nutritif peut être fourni sous forme d'un flacon de liquide nutritif concentré et/ou d'une poudre à diluer.

L'utilisateur n'a que de l'eau à fournir et ceci en petite quantité.

Le dispositif 10 de culture hydroponique selon la présente invention peut être rapporté dans un meuble de jardin 46 formant jardinière, afin de maintenir le dispositif de culture hydroponique à la hauteur souhaitée. Dans ce cas, un support, non représenté, masqué dans le meuble soutient le dispositif et plus particulièrement le bac 12 ou chaque bac 12 si plusieurs bacs sont prévus.

Lorsqu'il est prévu un meuble de jardin 46, il est aussi possible de prévoir des moyens de protection 48 contre le vent et/ou la pluie et/ou le froid.

Ces moyens de protection 48 escamotables consistent en deux volets 50-1, 50-2, de façon avantageuse transparente afin de laisser passer les photons de la lumière nécessaires à la photosynthèse.

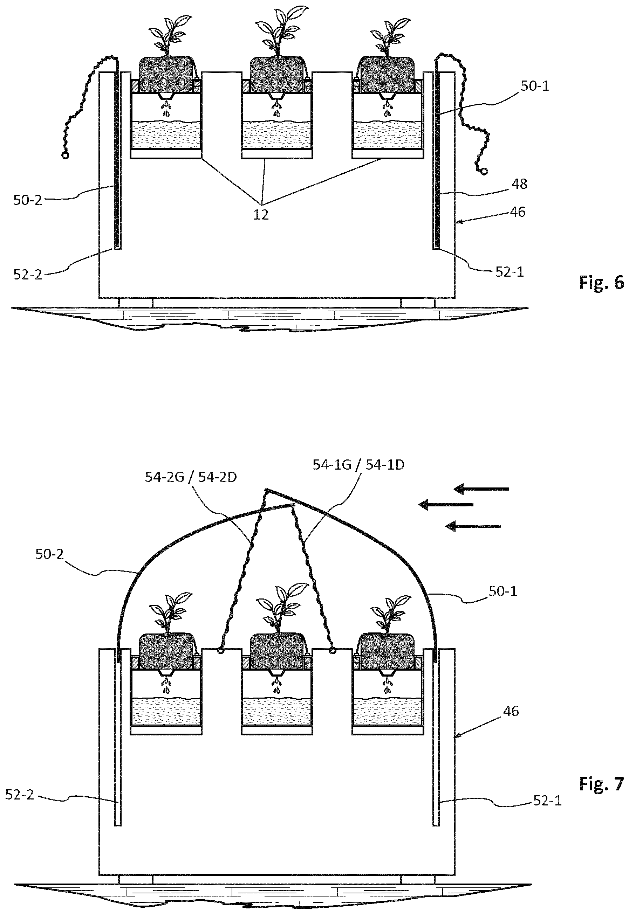

Ces deux volets 50-1 et 50-2 sont semi rigides. Ils sont disposés dans des coulisses 52-1, 52-2, notamment des fentes ménagées dans une partie du meuble afin de pouvoir faire coulisser en translation verticale lesdits volets. Chaque volet est en outre muni de deux liens 54-1G et 54-1D ; 54-2D et 54-2G dont une extrémité est solidaire respectivement des angles supérieurs du volet qui les porte, l'autre étant libre, voir figure 6.

Ainsi comme représenté sur la figure 7, qui ne fait pas partie de l'invention, une fois les volets 50-1 et 50-2 déplacés en translation vers le haut, la base étant toujours maintenue, les extrémités libres peuvent être accrochées par les liens 54, de façon réglable, sur des crochets prévus sur ledit meuble de jardin. Les volets sont alors courbés, de façon plus ou moins prononcée, en fonction du réglage.

Ces volets constituent des moyens de protection contre la pluie si les fleurs plantées sont fragiles, contre le froid si nécessaire et surtout contre le vent lorsque les hampes de fleurs ou les légumes concernés ne supportent pas les actions du vent.

Ces volets peuvent aussi servir en début de culture pour protéger les jeunes plants du froid et/ou du vent. Ces volets peuvent ensuite être escamotés pour ne pas perturber l'esthétique de l'ensemble.

On note que les volets 50-1 et 50-2 pourraient aussi être rapportés directement sur les bacs 12 du dispositif 10 selon la présente invention et plus exactement, dans des coulisses 52-1, 52-2, ménagées latéralement. Le dispositif de culture hydroponique selon l'invention serait ainsi totalement autonome, y compris en intégrant les moyens de protection.

La présente invention propose un perfectionnement au dispositif de culture, ce perfectionnement étant illustré sur la figure 8. Les éléments identiques portent les mêmes références, augmentées de 100, les références nouvelles étant dans la continuité des références du premier mode.

Un tel agencement comprend tout d'abord des parois extérieures du type à double parois, de façon à assurer une isolation tant vis-à-vis du froid que de la chaleur.

De tels profilés existent, les parois très minces étant entretoisées par des nervures courantes de façon à former une lame d'air isolante.

Le contenu du bac est ainsi protégé d'une transmission directe de la chaleur ou du froid.

Par ailleurs dans un souci de production des dispositifs selon l'invention et en vue d'applications multiples avec ledit produit, le bac 112 est constitué d'un profil général en U, comme dans le premier mode de réalisation avec deux parois 118, 120 latérales et inférieure 122.

Sur les parois latérales 118, 120 du U, il est prévu au moins une paire de rainures filantes 56, longitudinales et ouvertes vers le haut, en l'occurrence deux paires de rainures 56-1, 56-2 supérieures et 56-3, 56-4 inférieures.

La variante de réalisation du dispositif de la figure 8 présente aussi au moins une plaque 58, en l'occurrence deux plaques 58-1 supérieure et 58-2 inférieure. On note que ces deux plaques sont identiques.

Chaque au moins une plaque comprend des bords 60, en l'occurrence 60-1, 60-2 et 60-3, 60-4, avec des profils conjugués de celui des rainures filantes 56 dans lesquelles ils sont reçus. On note que ces profils sont symétriques par rapport au plan de la plaque qui les porte.

Ainsi, chaque plaque peut être emboîtée dans une rainure, quelle que soit son orientation. Au moins une des plaques 58, en l'occurrence les deux, porte une dépression 112-3 avec au moins un trou 112-5 d'écoulement, en V tronqué identique à la gorge du premier mode de réalisation.

Dans le mode préféré de réalisation de la variante, les deux plaques 58-1 supérieure et 58-2 inférieure sont totalement identiques, amovibles et sont donc interchangeables.

Il est donc possible de prévoir un agencement avec un pain de sphaigne ou de fibres plus généralement comme dans le mode présenté au principal.

Par contre la seconde plaque inférieure mise en place, permet de conserver un volume de fluide directement dans le bac et ce volume de fluide est préservé de la chaleur ou du froid également par cette seconde plaque inférieure. Dans cette architecture, les bouchons réservoirs sont inutiles et il est possible de placer uniquement des bouchons 126 à double paroi, exactement du même type que les parois 118 et 120, voire 122, de façon à obturer les extrémités.

Les goutteurs 144 sont conservés pour l'arrosage des pains en culture hydroponique, comme dans le premier mode. L'agencement avec la pompe est maintenu, y compris avec une alimentation solaire notamment pour les installations pour particuliers et ornementales. Dans ce cas, le pompage du fluide nutritif s'effectue directement dans le fond du bac et un tube distributeur est prévu pour alimenter les piquages 116-5 avec des goutteurs 144 tout le long du bac comme dans le premier mode.

Il est aussi possible de prévoir une culture en aéroponie avec retrait de la plaque inférieure 58-2 et projection de fluide de culture sur les racines de plants disposés sur la plaque supérieure, à travers les trous de réception des plants, ménagés dans la dépression 112-3.

Cette plaque supérieure est éventuellement retournée de façon à disposer aisément les plants. Les trous sont, bien entendu, d'un diamètre adapté aux besoins et assurent de fait l'écoulement du fluide nutritif en excès ou l'eau de pluie en plus de la réception des plants.

Suivant une autre utilisation du dispositif selon la présente invention, la plaque supérieure est retirée et la plaque inférieure est conservée avec une possibilité de faire remonter de l'eau à \travers les trous afin d'irriguer un substrat de semis par le dessous par un effet de marée. Les bords filaires assurent alors la rétention latérale.

La fabrication du dispositif selon ce perfectionnement est simplifiée et les stocks de produits sont réduits du fait de la réversibilité des plaques, de leur identité et de leur empilement possible. La fabrication du bac lui-même est simplifiée par la suppression des rampes et l'utilisation de produits connus à double parois, les rainures filaires étant venues de fabrication avec les parois.

Ce mode de réalisation peut prendre toute autre configuration notamment les formes de bords de plaques et des rainures, qui peuvent présenter des profils conjugués mais différents mais ayant les mêmes fonctions dans le même but.

Le bac selon ce mode perfectionné peut aussi être reçu dans un meuble de jardin 46 et être protégé du froid et du vent de façon générale par des volets.

De façon générale tous les accessoires du premier mode sont transposables.

En plus de l'hydroponie et de l'aéroponie, il est tout aussi possible de mettre en œuvre une culture de type NFT (nutrient film technic). Dans ce cas, une pompe alimente la plaque inférieure en liquide nutritif pour former un film nutritif que s'écoule sur la plaque inférieure et les racines baignent dans ce film nutritif tandis que les plants sont retenus dans les trous de la plaque supérieure. Le film retourne à la réserve en fond du bac.

## Revendications

1. Dispositif de culture en bac notamment hydroponique, modulaire, comprenant un bac (12, 112) monolithique, de longueur L, prise suivant un axe XX' longitudinal, à section fermée, de section en U, avec au moins une plaque (58) comportant au moins une dépression (112-3) et des trous (112-5) d'évacuation des fluides et/ou de réception de plants dans ladite dépression, des moyens d'administration (144) d'un fluide nutritif aux plants, des parois latérales (18, 20,118,120) au moins étant à double parois, **caractérisé en ce que** ces parois latérales (18,20,118,120) comprennent au moins une paire de rainures filantes (56) et la au moins une plaque (58) comprend des bords (60) de profil conjugué de celui desdites rainures filantes, double, de façon à rendre la au moins une plaque (58) réversible.

2. Dispositif de culture en bac notamment hydroponique, modulaire, selon la revendication 1, **caractérisé en ce qu'**il comprend une plaque supérieure (58-1) et une plaque inférieure (58-2).

3. Dispositif de culture en bac notamment hydroponique, modulaire, selon la revendication 2, **caractérisé en ce que** les plaques supérieure (58-1) et inférieure (58-2) sont identiques.

4. Dispositif de culture en bac notamment hydroponique, modulaire, selon l'une quelconque des revendications précédentes, **caractérisé en ce que** la dépression (112-3) prend la forme d'une gorge en V tronqué, les trous (112-5) d'évacuation des fluides et/ou de réception des plants étant ménagés dans la partie inférieure (112-4) de cette dépression (112-3).

5. Dispositif de culture en bac notamment hydroponique, modulaire, selon la revendication 1, **caractérisé en ce qu'**au moins une des branches longitudinales du U de la face supérieure comporte une rampe longitudinale (16), fermée sur quatre côtés et apte à recevoir des bouchons (16-6) sur les deux autres faces.

6. Dispositif de culture en bac notamment hydroponique, modulaire, selon la revendication 5, **caractérisé en ce que** la rampe longitudinale (16) comprend un piquage (16-5) d'alimentation et au moins un goutteur (44).

7. Dispositif de culture en bac notamment hydroponique, modulaire, selon l'une quelconque des revendications précédentes, **caractérisé en ce que** le bac (12, 112) est obturé à ses extrémités par des bouchons (26, 126).

8. Dispositif de culture en bac notamment hydroponique, modulaire, selon la revendication 7, **caractérisé en ce que** au moins un bouchon (28, 30) comprend une cavité de puisage (28-7, 30-7) et un orifice de puisage.

9. Dispositif de culture en bac notamment hydroponique, modulaire, selon la revendication 8, **caractérisé en ce qu'**il comprend une pompe (40), une prise d'eau (40-2), positionnée dans la cavité de puisage (28-7, 30-7) et un tuyau de connexion (40-3) permettant de relier la sortie de la pompe (40) et le piquage (16-5) de la rampe longitudinale (16).

10. Dispositif de culture en bac notamment hydroponique, modulaire, selon l'une quelconque des revendications précédentes, **caractérisé en ce que**, lorsqu'au moins un bac (112) est intégré dans un meuble de jardin (46), il est prévu des moyens de protection (48) escamotables contre le vent et/ou la pluie et/ou le froid comprenant deux volets (50-1, 50-2) semi rigides, disposés mobiles en translation dans des coulisses (52-1, 52-2), chaque volet étant en outre muni de liens (54).

## Patentansprüche

1. Modulare Vorrichtung zum Kultivieren in einem Behälter, insbesondere hydroponisch, umfassend einen monolithischen Behälter (12, 112) mit Länge L, die entlang einer Längsachse XX' genommen wird, mit geschlossenem Querschnitt, mit U-förmigem Querschnitt, mit mindestens einer Platte (58), die mindestens eine Vertiefung (112-3) und Löcher (112-5) zum Abführen von Flüssigkeiten und/oder zum Aufnehmen von Pflanzen in der Vertiefung aufweist, Mitteln (144) zum Verabreichen einer Nährflüssigkeit an die Pflanzen, lateralen Wänden (18, 20,118,120), die mindestens doppelwandig sind, **dadurch gekennzeichnet, dass** diese lateralen Wände (18, 20, 118, 120) mindestens ein Paar Streifenrillen (56) umfassen und die mindestens eine Platte (58) Kanten (60), deren Profil dem der Streifenrillen entspricht, doppelt umfasst, um die mindestens eine Platte (58) reversibel zu machen.

2. Modulare Vorrichtung zum Kultivieren in dem Behälter, insbesondere hydroponisch, nach Anspruch 1, **dadurch gekennzeichnet, dass** sie eine obere Platte (58-1) und eine untere Platte (58-2) umfasst.

3. Modulare Vorrichtung zum Kultivieren in dem Behälter, insbesondere hydroponisch, nach Anspruch 2, **dadurch gekennzeichnet, dass** die obere (58-1) und die untere (58-2) Platte identisch sind.

4. Modulare Vorrichtung zum Kultivieren in dem Behälter, insbesondere hydroponisch, nach einem der vorstehenden Ansprüche, **dadurch gekennzeichnet, dass** die Vertiefung (112-3) die Form einer abgestumpften V-förmigen Nut einnimmt, wobei die Löcher (112-5) zum Abführen von Flüssigkeiten und/oder zum Aufnehmen von Pflanzen in dem unteren Teil (112-4) dieser Vertiefung (112-3) untergebracht sind.

5. Modulare Vorrichtung zum Kultivieren in dem Behälter, insbesondere hydroponisch, nach Anspruch 1, **dadurch gekennzeichnet, dass** mindestens einer der Längsschenkel des U der oberen Fläche eine Längsrampe (16) aufweist, die auf vier Seiten geschlossen und geeignet ist, um Stopfen (16-6) auf den anderen zwei Flächen aufzunehmen.

6. Modulare Vorrichtung zum Kultivieren in dem Behälter, insbesondere hydroponisch, nach Anspruch 5, **dadurch gekennzeichnet, dass** die Längsrampe (16) eine Versorgungsleitung (16-5) und mindestens einen Tropfer (44) umfasst.

7. Modulare Vorrichtung zum Kultivieren in dem Behälter insbesondere hydroponisch, nach einem der vorstehenden Ansprüche, **dadurch gekennzeichnet, dass** der Behälter (12,112) an seinen Enden durch Stopfen (26,126) verschlossen ist.

8. Modulare Vorrichtung zum Kultivieren in dem Behälter insbesondere hydroponisch, nach Anspruch 7, **dadurch gekennzeichnet, dass** mindestens ein Stopfen (28, 30) einen Zapfhohlraum (28-7, 30-7) und eine Zapföffnung umfasst.

9. Modulare Vorrichtung zum Kultivieren in dem Behälter, insbesondere hydroponisch, nach Anspruch 8, **dadurch gekennzeichnet, dass** sie eine Pumpe (40), einen Wasseranschluss (40-2), der in dem Zapfhohlraum (28-7, 30- 7) positioniert ist, und ein Verbindungsrohr (40-3) umfasst, das es ermöglicht, den Ausgang der Pumpe (40) und die Leitung (16-5) der Längsrampe (16) zu verbinden.

10. Modulare Vorrichtung zum Kultivieren in dem Behälter, insbesondere hydroponisch, nach einem der vorstehenden Ansprüche, **dadurch gekennzeichnet, dass**, wenn mindestens ein Behälter (112) in ein Gartenmöbel (46) integriert ist, versenkbare Schutzmittel (48) gegen den Wind und/oder den Regen und/oder die Kälte vorgesehen sind, umfassend zwei halbstarre Klappen (50-1, 50-2), die in Gleitführungen (52-1, 52-2) verschiebbar angeordnet sind, wobei jede Klappe ferner mit Bändern (54) ausgestattet ist.

## Claims

1. Modular device for in particular hydroponic cultivation in a container, comprising a one-piece container (12, 112) having a length L, taken along a longitudinal axis XX', having a closed cross-section, of a U-shaped cross-section, and having at least one plate (58) comprising at least one depression (112-3) and holes (112-5) for discharging fluids and/or receiving plants in said depression, means (144) for administering a nutrient fluid to the plants, lateral walls (18, 20, 118, 120) at least being double-walled, **characterized in that** these lateral walls (18, 20, 118, 120) comprise at least one pair of continuous grooves (56) and the at least one plate (58) comprises edges (60) having a profile which matches that of said continuous grooves, doubled, so as to make the at least one plate (58) reversible.

2. Modular device for in particular hydroponic cultivation in a container according to claim 1, **characterized in that** it comprises an upper plate (58-1) and a lower plate (58-2).

3. Modular device for in particular hydroponic cultivation in a container according to claim 2, **characterized in that** the upper (58-1) and lower (58-2) plates are identical.

4. Modular device for in particular hydroponic cultivation in a container according to any of the preceding claims, **characterized in that** the depression (112-3) takes the form of a truncated V-shaped recess, the holes (112-5) for discharging the fluids and/or receiving the plants being provided in the lower portion (112-4) of this depression (112-3).

5. Modular device for in particular hydroponic cultivation in a container according to claim 1, **characterized in that** at least one of the longitudinal arms of the U of the upper surface comprises a longitudinal ramp (16) which is closed on four sides and is capable of receiving stoppers (16-6) on the other two surfaces.

6. Modular device for in particular hydroponic cultivation in a container according to claim 5, **characterized in that** the longitudinal ramp (16) comprises a supply tap (16-5) and at least one drip (44).

7. Modular device for in particular hydroponic cultivation in a container according to any of the preceding claims, **characterized in that** the container (12, 112) is closed off at its ends by stoppers (26, 126).

8. Modular device for in particular hydroponic cultivation in a container according to claim 7, **characterized in that** at least one stopper (28, 30) comprises a drawing point cavity (28-7, 30-7) and a drawing point opening.

9. Modular device for in particular hydroponic cultivation in a container according to claim 8, **characterized in that** it comprises a pump (40), a water plug (40-2) positioned in the drawing point cavity (28-7, 30-7) and a connection pipe (40-3) making it possible to connect the outlet of the pump (40) and the tap (16-5) of the longitudinal ramp (16).

10. Modular device for in particular hydroponic cultivation in a container according to any of the preceding claims, **characterized in that**, when at least one container (112) is integrated into a piece of garden furniture (46), retractable means (48) for protecting against the wind and/or rain and/or cold are provided, which comprise two semi-rigid flaps (50-1, 50-2) that are arranged so as to be translatable in slides (52-1, 52-2), each flap also being provided with connections (54).
